# EUROPÄISCHE PATENTSCHRIFT

(11) **EP 3 677 540 B1**
(45) Veröffentlichungstag und Bekanntmachung des Hinweises auf die Patenterteilung: **01.05.2024**
(21) Anmeldenummer: 19212039.2
(22) Anmeldetag: 28.11.2019
(51) Int. Cl.: B66F 9/075, B66F 9/22

(54) **FLURFÖRDERZEUG**
INDUSTRIAL TRUCK
CHARIOT DE MANUTENTION

(30) Priorität: 31.12.2018 DE 102018133714; 10.01.2019 DE 102019100454
(43) Veröffentlichungstag der Anmeldung: 08.07.2020
(73) Patentinhaber: STILL GmbH, 22113 Hamburg (DE)
(72) Erfinder: SCHAUER, Sebastian, 22529 Hamburg (DE); HAHN, Andreas, 21224 Rosengarten (DE)
(74) Vertreter: Patentship Patentanwaltgesellschaft

(56) Entgegenhaltungen:
- EP-A1- 2 910 515
- DE-A1- 10 347 065
- DE-A1-102007 014 967
- DE-A1-102009 049 498
- DE-A1-102012 108 857
- DE-A1-102014 112 617

## Beschreibung

Die Erfindung betrifft ein Flurförderzeug, insbesondere elektrisch betriebenes Flurförderzeug, mit einem Hydraulikkreislauf einer Arbeitshydraulik und einer in einem Aufnahmeraum angeordneten Energieversorgungseinheit, insbesondere einer in einem Batteriefach angeordnete Traktionsbatterie, wobei das Flurförderzeug mit einer Öffnung für einen Wechsel der Energieversorgungseinheit in vertikaler und/oder in horizontaler Richtung versehen ist, insbesondere das Flurförderzeug mit einer seitlichen Öffnung für einen seitlichen Wechsel der Energieversorgungseinheit in horizontaler Richtung versehen ist, und eine Sicherungseinrichtung zum Sichern der in dem Aufnahmeraum angeordneten Energieversorgungseinheit während des Betriebs des Flurförderzeugs vorgesehen ist, wobei die Sicherungseinrichtung eine hydraulisch betätigte Fixierungseinrichtung umfasst, die mit dem Hydraulikkreislauf der Arbeitshydraulik hydraulisch verbunden ist, wobei die Fixierungseinrichtung einen hydraulisch zwischen einer Freigabestellung und einer Fixierungsstellung verfahrbaren Zylinder aufweist.

Flurförderzeuge mit einem insbesondere elektrischen Antriebssystem, insbesondere Gegengewichtsgabelstapler, können an dem Aufnahmeraum im oberen Bereich mit einer Öffnung versehen sein, für einen seitlichen Wechsel der Energieversorgungseinheit in vertikaler Richtung. Als Energieversorgungseinheit kann hierbei eine Traktionsbatterie, eine Brennstoffzelleneinheit oder eine Hybridantriebseinheit vorgesehen sein. Um die Energieversorgungseinheit zu wechseln, wird die im Flurförderzeug vorhandene Energieversorgungseinheit in vertikaler Richtung aus dem Aufnahmeraum des Flurförderzeugs über die Öffnung im oberen Bereich des Aufnahmeraums heraus bewegt.

Flurförderzeuge mit einem insbesondere elektrischen Antriebssystem, insbesondere Gegengewichtsgabelstapler, sind insbesondere in jüngerer Zeit häufig mit einer seitlichen Öffnung für einen seitlichen Wechsel der Energieversorgungseinheit in horizontaler Richtung ausgeführt. Als Energieversorgungseinheit kann hierbei eine Traktionsbatterie, eine Brennstoffzelleneinheit oder eine Hybridantriebseinheit vorgesehen sein. Um die Energieversorgungseinheit zu wechseln, wird die im Flurförderzeug vorhandene Energieversorgungseinheit in horizontaler und seitlicher Richtung teilweise oder vollständig aus dem Batteriefach des Flurförderzeugs aus der seitlichen Öffnung heraus bewegt.

Der Wechsel der Energieversorgungseinheit kann mit einem Hallenkran unter Verwendung eines Batteriehebegeschirrs bzw. eines sogenannten C-Hakens erfolgen. Alternativ kann zum Wechsel der Energieversorgungseinheit ein zweites Flurförderzeug eingesetzt werden, indem die Energieversorgungseinheit mit einer Lastgabel des zweiten Flurförderzeugs unterfahren und angehoben wird. Ein Wechsel der Energieversorgungseinheit kann weiterhin mit einem zweiten Flurförderzeug in Verbindung mit einer Hebetraverse zum Ankranen der Energieversorgungseinheit durchgeführt werden.

Zur Erleichterung der Bewegung in horizontaler und seitlicher Richtung während des Wechsels der Energieversorgungseinheit können bei einem seitlichen Wechsel der Energieversorgungseinheit weiterhin an der Energieversorgungseinheit Rollen angeordnet werden oder im Bereich einer Aufstandsfläche in dem Aufnahmeraum des Flurförderzeugs eine Rollenbahn oder Gleitschienen angeordnet werden. Zum Wechsel der Energieversorgungseinheit kann diese aus dem Flurförderzeug über die seitliche Öffnung teilweise oder vollständig herausgezogen werden, um dann beispielsweise mit einem Hallenkran angehoben und weiter transportiert zu werden.

Während des Betriebs des Flurförderzeugs ist die Energieversorgungseinheit in dem Aufnahmeraum angeordnet und in dem Aufnahmeraum gegen eine unbeabsichtige Bewegung zu sichern und zu fixieren, insbesondere gegen eine unerwünschte seitliche Bewegung in Fahrzeugquerrichtung und/oder eine unerwünschte Bewegung in Fahrzeuglängsrichtung. Eine seitliche Bewegung und/oder eine Längsbewegung einer als Traktionsbatterie ausgebildeten Energieversorgungseinheit in dem Aufnahmeraum kann beispielsweise zu Beschädigungen an der Traktionsbatterie führen, insbesondere durch scharfe Kanten, Schweißnähte oder Schweißrückstände in dem Aufnahmeraum. Derartige Beschädigungen an der Traktionsbatterie führen zu einem hohen Serviceaufwand und einem häufigen Ersatz der Traktionsbatterie. Eine in dem Aufnahmeraum verkanteter Traktionsbatterie erschwert zudem den Batteriewechsel mit einer Wechselvorrichtung und macht diesen zeitlich aufwändig.

Eine unerwünschte seitliche Bewegung und/oder eine unerwünschte Längsbewegung der Energieversorgungseinheit in dem Aufnahmeraum kann beispielsweise auftreten, wenn Beschleunigungen des Flurförderzeugs zu entsprechenden horizontalen seitlichen Bewegungen und/oder Längsbewegungen der Energieversorgungseinheit in dem Aufnahmeraum führen, sofern die Reibung zwischen der Energieversorgungseinheit und der fahrzeugseitigen Aufstandsfläche in dem Aufnahmeraum überwunden wird. Derartige Kräfte können insbesondere bei einer Kurvenfahrt oder bei Kollisionen auftreten, die beispielsweise beim Aufnehmen einer Last oder beim Anstoßen an ein Hindernis auftreten können, insbesondere beim Anstoßen an ein Hindernis mit dem Gegengewicht bei einem Gegengewichtsgabelstapler.

Um eine unerwünschte seitliche Bewegung der Energieversorgungseinheit in Fahrzeugquerrichtung während des Betriebs des Flurförderzeugs zu vermeiden und insbesondere ein ungewolltes seitliches Herausrutschen bzw. Herausrollen der auswechselbaren Energieversorgungseinheit bei einem Flurförderzeug mit einem seitlichen Wechsel der Energieversorgungseinheit aus der seitlichen Öffnung zu vermeiden, werden bislang als Verriegelungseinrichtungen ausgebildete Sicherungseinrichtungen verwendet, die an der mit der Öffnung versehenen Rahmenseite des Flurförderzeugs angeordnet sind. Die Sicherungseinrichtung weist hierzu eine Anlagefläche auf, die mit einer der seitlichen Öffnung zugewandten Fläche der Energieversorgungseinheit zusammenwirkt, so dass ein seitliches Herausrutschen der Energieversorgungseinheit aus der seitlichen Öffnung des Flurförderzeugs vermieden werden kann.

Hierzu ist beispielsweise aus der einen Gabelstapler offenbarenden DE 103 46 550 A1 bekannt, mit einer die seitliche Öffnung verschließenden Tür gleichzeitig die Energieversorgungseinheit in seitlicher Richtung zu sichern. Eine derartige Tür als Sicherungseinrichtung, um unerwünschte Bewegungen der Energieversorgungseinheit in seitlicher Richtung während des Betriebs des Flurförderzeugs zu vermeiden, weist jedoch einen hohen Bauaufwand auf.

Aus der DE 10 2007 028 862 A1 ist es bekannt, an der Seitenfläche des Aufnahmeraums als Sicherungseinrichtung einen zwischen einer Freigabestellung und einer Verriegelungsstellung verschwenkbaren Riegel vorzusehen, der in der Verriegelungsstellung eine starre mechanische Sperre gegen seitliches Ausbrechen und Herausrutschen der Energieversorgungseinheit aus dem Aufnahmeraum bildet. Der zwischen einer Freigabestellung und einer Verriegelungsstellung verschwenkbare Riegel ist mit der Schwenkachse starr am Fahrzeugkörper, beispielsweise dem Rahmen des Flurförderzeugs oder einem Gegengewicht befestigt.

Durch Toleranzen, beispielsweise Fertigungstoleranzen, in den Energieversorgungseinheiten und dem Fahrzeugkörper des Flurförderzeugs entsteht jedoch ein unvermeidbares Spiel in Fahrzeugquerrichtung zwischen dem starr am Flurförderzeug angeordneten schwenkbaren Riegel und der in dem Aufnahmeraum angeordneten Energieversorgungseinheit. Aufgrund dieses Spiels sind jedoch noch unerwünschte Bewegungen der Energieversorgungseinheit in Fahrzeugquerrichtung während des Fahrbetriebs des Flurförderzeugs möglich, die zu mechanischen Geräuschen und zu zusätzlichen Belastungen an der Sicherungseinrichtung führen können. Daher ist der verschwenkbare Riegel entsprechend stabil auszuführen, wodurch der Bauaufwand für die Sicherungseinrichtung erhöht wird. Die aufgrund dieses Spiels noch möglichen unerwünschten Bewegungen der Energieversorgungseinheit in Fahrzeugquerrichtung während des Fahrbetriebs des Flurförderzeugs können weiterhin zu Beschädigungen an der Energieversorgungseinheit sowie zu Beschädigungen in dem Aufnahmeraum des Flurförderzeugs führen.

Um das aufgrund der Toleranzen unvermeidbare Spiel in Fahrzeugquerrichtung zwischen dem starr am Flurförderzeug angeordneten schwenkbaren Riegel und der in dem Aufnahmeraum angeordneten Energieversorgungseinheit auszugleichen, ist es bereits bekannt, ein zusätzliches Spannmittel an der Sicherungseinrichtung vorzusehen. Ein Spannmittel kann beispielsweise von einem schraubbaren Riegel oder einer an dem Riegel angeordneten zusätzlichen Schraubklemme oder Spannschraube gebildet werden, die von einer Bedienperson manuell bedient und beispielsweise mit der Hand angezogen bzw. gelöst werden muss. Mit einem derartigen Spannmittel an dem verschwenkbaren Riegel kann jedoch nur das Spiel zwischen dem Riegel und der Energieversorgungseinheit in Bewegungsrichtung der Energieversorgungseinheit ausgeschaltet und eliminiert werden, das unmittelbar nach dem Einführen der Energieversorgungseinheit in den Aufnahmeraum besteht. Eine Verspannung der Energieversorgungseinheit in dem Aufnahmeraum in seitlicher Richtung kann jedoch nicht sichergestellt werden. Im Fahrbetrieb des Flurförderzeugs kann somit die Energieversorgungseinheit an einen der Öffnung gegenüberliegend angeordneten fahrzeugseitigen Anschlag in dem Aufnahmeraum rutschen, so dass erneut ein Spiel in Fahrzeugquerrichtung zwischen dem starr am Flurförderzeug angeordneten schwenkbaren Riegel und der in dem Aufnahmeraum angeordneten Energieversorgungseinheit aufritt. Die Gründe für ein mangelndes Verspannen der Energieversorgungseinheit in dem Aufnahmeraum trotz angezogenem Spannmittel können darin liegen, dass das Spannmittel aus Nachlässigkeit nicht angezogen wird, das Spannmittel sich im Betrieb des Flurförderzeugs löst, oder beim Anziehen des Spannmittels die Energieversorgungseinheit nicht an einem gegenüberliegend zu der Öffnung angeordneten fahrzeugseitigen Anschlag in dem Aufnahmeraum anliegt und somit ein Spiel in seitlicher Richtung an der der Öffnung gegenüberliegenden Fahrzeugseite zwischen dem Aufnahmeraum und der Energieversorgungseinheit verbleibt. In der Regel kann bei einem Anziehen des Spannmittels mit der Hand keine ausreichende hohe Kraft erzeugt werden, um die Energieversorgungseinheit, die im Falle der Ausbildung als Traktionsbatterie das Gewicht von mehreren hundert Kilo bis zu mehreren Tonnen aufweisen kann, in seitlicher Richtung zu verschieben und gegen den entsprechenden fahrzeugseitigen Anschlag im Aufnahmeraum zu verspannen.

Um das seitliche Spiel der Energieversorgungseinheit im Aufnahmeraum zu eliminieren, wird in der DE 10 2016 113 154 A1 vorgeschlagen, dass der Riegel in Längsrichtung der Schwenkachse verschiebbar am Flurförderzeug angeordnet ist und ein mit dem Riegel in Wirkverbindung stehender Nachstellmechanismus vorgesehen ist, der die Anlagefläche des Riegels in Anlage an der der seitlichen Öffnung zugewandten Fläche der Energieversorgungseinheit hält. Mit einem derartigen, in Längsrichtung der Schwenkachse verschiebbar am Flurförderzeug angeordneten Riegel und mit einem Nachstellmechanismus, der eine Längsbewegung des Riegels in Längsrichtung der Schwenkachse erzeugt, um die Anlagefläche des Riegels in Anlage an der der seitlichen Öffnung zugewandten Fläche der Energieversorgungseinheit zu halten, wird eine Einstellmöglichkeit und Nachstellmöglichkeit des Riegels in Bewegungsrichtung der Energieversorgungseinheit geschaffen, mit der ein seitliches Spiel zwischen dem Riegel und der Energieversorgungseinheit eliminiert und somit ein Anliegen des Riegels an der Energieversorgungseinheit erzielt werden kann und weiterhin ein seitliches Spiel in Bewegungsrichtung der Energieversorgungseinheit zwischen der Energieversorgungseinheit und einem fahrzeugseitigen Anschlag im Aufnahmeraum eliminiert werden kann.

Die bekannten einfachen mechanischen Verriegelungen, wie z.B. manuelle Schraubklemmlösungen, sind häufig nach dem Wechsel der Energieversorgungseinheit nicht nachstellend und können sich oftmals während des Fahrbetriebs lockern. Die beschriebenen weiter entwickelten mechanischen Verriegelungen sind konstruktiv sehr aufwendig.

Um eine unerwünschte Längsbewegung der Energieversorgungseinheit in Fahrzeuglängsrichtung während des Betriebs des Flurförderzeugs zu vermeiden, ist es aus der EP 1 808 403 A2 bekannt, in dem Boden der Aufstandsfläche, auf der die Traktionsbatterie aufsteht, mehrere federbelastete Rasthaken anzuordnen, die die Traktionsbatterie an der vorderen und hinteren Stirnseite gegen Rutschen in Längsrichtung sichern. Aus der EP 1 712 513 A2 ist es bekannt, die Traktionsbatterie eines Flurförderzeugs gegen Rutschen in Längsrichtung mittels federbelasteter und arretierbarer Rastspanner zu sichern.

Grundsätzlich unterliegen wechselbare Energieversorgungseinheiten von Flurförderzeugen, insbesondere Traktionsbatterien, einem technischen Zielkonflikt:
Einerseits soll die Energieversorgungseinheit während der Fahrt möglichst starr mit dem Flurförderzeug verbunden sein und es soll keine Bewegung der Energieversorgungseinheit im Aufnahmeraum auftreten, um zu verhindern, dass die Energieversorgungseinheit unkontrolliert bei dynamischen Fahrbewegungen umher rutscht.

Andererseits wird beim Wechsel der Energieversorgungseinheit oder beim Aus-/Einbau der Energieversorgungseinheit jedoch ein großzügiger Freiraum zum einfachen und robusten Handling und Wechsel der Energieversorgungseinheit gewünscht.

Außerdem zeichnen sich neuere Fahrzeugkonzepte von Flurförderzeugen durch höhere Fahrgeschwindigkeiten, geringere Wenderadien und demnach durch eine höhere Fahrdynamik aus. Während bei früheren Fahrzeugkonzepten von Flurförderzeugen die im Aufnahmeraum angeordnete Energieversorgungseinheit bei herkömmlichen Verriegelungen nicht rutschte, neigt die im Aufnahmeraum angeordneten Energieversorgungseinheit bei den neueren Fahrzeugkonzepten von Flurförderzeugen eher zum Rutschen.

Darüber hinaus sind die Anforderungen an die Sorgfalt, mit der die Energieversorgungseinheiten zu behandeln sind, durch ihren elementaren und finanziellen Wert gestiegen. Eine als Traktionsbatterie ausgebildete Energieversorgungseinheit ist eine maßgebliche Investition des Betreibers eines Flurförderzeugs. Es ist zu erwarten, dass durch den Einsatz von Lithium-Ionen-Batterien als Energieversorgungseinheit in Flurförderzeugen der Wert der Traktionsbatterie weiter ansteigt und damit ein noch sorgsamerer Umgang einhergehen muss.

Durch Einsatz intelligenter Onboard-Batteriemanagementsysteme werden derartige Lithium-lonen-Batterien außerdem empfindlicher für mechanische Stöße, z.B. beim Überfahren von Schlaglöchern.

Aus der DE 10 2009 049 498 A1 ist ein gattungsgemäßes Flurförderzeug mit den Merkmalen des Oberbegriffs des Patentanspruchs 1 bekannt.

Die DE 10 2007 014 967 A1 offenbart ein Flurförderzeug mit einem seitlichen Batteriewechsel, bei dem die Energieversorgungseinheit in Fahrzeugquerrichtung mittels einer Verriegelungseinrichtung in Fahrzeugquerrichtung verriegelt wird. Die Verriegelungseinrichtung weist einen um eine Achse, die in einem Langloch geführt ist, schwenkbaren Riegel auf, der mittels eines doppeltwirkenden Hydraulikzylinders, der in Fahrzeugquerrichtung liegend eingebaut ist, betätigbar ist. Der Hydraulikzylinders ist zur Betätigung des Riegels an dem Riegel gelenkig angelenkt.

Die DE 103 47 065 A1 offenbart ein Flurförderzeug mit einem seitlichem Batteriewechsel, wobei ein in Fahrzeugquerrichtung eingebauter Hydraulikzylinder einen in Fahrzeugquerrichtung verschiebbaren Schubschlittens betätigt, auf dem die Energieversorgungseinheit aufsteht. Der den Schubschlitten betätigende Hydraulikzylinder kann mittels eines Umschaltventils an einen Verbraucher der Arbeitshydraulik des Flurförderzeugs angeschlossen werden.

Der vorliegenden Erfindung liegt die Aufgabe zugrunde, ein Flurförderzeug der eingangs genannten Art so auszugestalten, dass unter allen Betriebsbedingungen eine zuverlässige Fixierung der Energieversorgungseinheit im Aufnahmeraum gewährleistet ist.

Diese Aufgabe wird erfindungsgemäß dadurch gelöst, dass der Zylinder an einem Zylinderende an einer Fahrzeugstruktur des Flurförderzeugs befestigt ist und am anderen Ende mit einer Anlagefläche für eine Fläche der Energieversorgungseinheit versehen ist, wobei der Zylinder die Anlagefläche in der Fixierungsstellung in Anlage an der Fläche der Energieversorgungseinheit hält und die Energieversorgungseinheit gegen einen Anschlag der Fahrzeugstruktur beaufschlagt und wobei der Zylinder die Anlagefläche in der Freigabestellung in einem Abstand zur Fläche der Energieversorgungseinheit hält, wobei der Zylinder als einfachwirkender Hydraulikzylinder ausgebildet ist, der eine in einem Zylindergehäuse verfahrbare Kolbenstange aufweist, an der die Anlagefläche ausgebildet ist, wobei die Kolbenstange bei Beaufschlagung eines Druckraumes mit Hydraulikmedium in die Fixierstellung ausfährt und bei Entlastung des Druckraumes mittels einer Feder in die Freigabestellung einfährt.

Der Erfindung liegt dabei die Überlegung zu Grunde, dass die bei einem Flurförderzeug vorhandene Arbeitshydraulik genutzt werden kann, um die für eine vollständige Fixierung der Energieversorgungseinheit erforderliche Klemmkraft zur Verfügung zu stellen. Die hydraulisch betätigte Fixierungseinrichtung kann schnell betätigt werden, um die im Aufnahmeraum befindliche Energieversorgungseinheit gegen unerwünschte Bewegungen zu sichern, und schnell wieder gelöst werden und es kann genügend Freiraum geschaffen werden, um die Energieversorgungseinheit bequem aus dem Flurförderzeug herausnehmen zu können. Außerdem erlaubt die hydraulische Fixierungseinrichtung einen sehr flexiblen Einsatz bei unterschiedlichen Größen der Energieversorgungseinheit.

Erfindungsgemäß weist die Fixierungseinrichtung einen hydraulisch zwischen einer Freigabestellung und einer Fixierungsstellung verfahrbaren Zylinder auf. Der Zylinder ist an einem Zylinderende an einer Fahrzeugstruktur des Flurförderzeugs befestigt und am anderen Ende mit einer Anlagefläche für eine Fläche der Energieversorgungseinheit versehen. Dabei hält der Zylinder die Anlagefläche in der Fixierungsstellung in Anlage an der Fläche der Energieversorgungseinheit und beaufschlagt die Energieversorgungseinheit gegen einen Anschlag der Fahrzeugstruktur, wodurch unerwünschte Bewegungen der Energieversorgungseinheit in dem Aufnahmeraum verhindert werden. In der Freigabestellung hält der Zylinder die Anlagefläche in einem Abstand zur Fläche der Energieversorgungseinheit, wodurch ein entsprechender Freiraum für einen einfachen Wechsel bzw. Aus- und Einbau der Energieversorgungseinheit erzielt wird.

Erfindungsgemäß ist weiterhin der Zylinder als einfachwirkender Hydraulikzylinder ausgebildet, der eine in einem Zylindergehäuse verfahrbare Kolbenstange aufweist, an der die Anlagefläche ausgebildet ist, wobei die Kolbenstange bei Beaufschlagung eines Druckraumes mit Hydraulikmedium in die Fixierstellung ausfährt und bei Entlastung des Druckraumes mittels einer Feder in die Freigabestellung einfährt. Ein derartiger einfachwirkender Hydraulikzylinder bzw. Hydraulikstempel weist einen einfachen Aufbau auf und kann auf einfache Weise mit dem Hydraulikkreislauf der Arbeitshydraulik verbunden werden.

Dabei ist die Fixierungseinrichtung zweckmäßigerweise selbstnachstellend und wieder lösbar ausgebildet. Hierzu ist die Fixierungseinrichtung bevorzugt derart ausgestaltet, dass bei einem Lockerwerden der Fixierung durch nachströmendes Hydraulikmedium automatisch eine Nachstellung erfolgt. Durch einfaches Ablassen des Hydraulikmediums kann die Fixierung wieder gelöst werden.

In einer vorteilhaften Ausführungsform ist die Fixierungseinrichtung zur Fixierung der Energieversorgungseinheit in Fahrzeuglängsrichtung ausgebildet.

Eine alternative oder zusätzliche vorteilhafte Ausführungsform sieht vor, dass die Fixierungseinrichtung zur Fixierung der Energieversorgungseinheit in Fahrzeugquerrichtung ausgebildet ist.

Zur Versorgung der Fixierungseinrichtung mit Hydraulikmedium ist die Fixierungseinrichtung vorzugsweise über eine zwischen einem Wegeventilblock und einem Verbraucher der Arbeitshydraulik abzweigende Hydraulikzweigleitung mit dem Hydraulikkreislauf der Arbeitshydraulik verbunden. Auf diese Weise kann unter Druck stehendes Hydraulikmedium vom vorhandenen Hydraulikkreislauf der Arbeitshydraulik abgezweigt werden, um für die erforderliche Klemmkraft der hydraulischen Fixierungseinrichtung zur Verfügung zu stehen.

Dabei ist in die Hydraulikzweigleitung bevorzugt eine hydraulische Sekundärventileinheit eingeschaltet, die zumindest ein Druckbegrenzungsventil und ein schaltbares Sperrventil umfasst. Mittels des schaltbaren Sperrventils, das eine Sperrstellung und eine Öffnungsstellung aufweist, der Sekundärventileinheit kann die Fixierungseinrichtung durch gezieltes Zu- und Abschalten des Zuflusses von Hydraulikmedium zwischen der Fixierstellung und der Freigabestellung gesteuert werden. Die Klemmkraft der hydraulischen Fixiereinrichtung in der Fixierstellung kann durch das Druckbegrenzungsventil auf einfache Weise eingestellt und begrenzt werden.

In einer zweckmäßigen Ausführungsform sind das Druckbegrenzungsventil und das Sperrventil in Ableitungen zu einem Hydrauliktank eingeschaltet, die von der zur Fixierungseinrichtung führenden Hydraulikzweigleitung abzweigen. Durch diese Anordnung wird erreicht, dass in der Sperrstellung des Sperrventils das Hydraulikmedium zur Fixierungseinrichtung geleitet wird, während in der Öffnungsstellung des Sperrventils das Hydraulikmedium direkt in den Hydrauliktank abgeleitet wird. Bei Überschreitung des am Druckbegrenzungsventils eingestellten Druckniveaus in der Hydraulikzweigleitung kann mittels des Druckbegrenzungsventils das Hydraulikmedium ebenfalls direkt in den Hydrauliktank abgeleitet werden.

Um sicherzustellen, dass zunächst der Verbraucher der Arbeitshydraulik ausreichend mit Hydraulikdruck versorgt wird, ist vorzugsweise der Sekundärventileinheit ein in Richtung zur Abzweigung der Hydraulikzweigleitung vom Hydraulikkreislauf der Arbeitshydraulik sperrendes Rückschlagventil, insbesondere ein federbelastetes Rückschlagventil, vorgeschaltet. Somit wird die Sekundärventileinheit erst mit Hydraulikmedium versorgt, wenn ein an der Feder des federbelasteten Rückschlagventils vorbestimmter Öffnungsdruck überwunden wird.

Zur Steuerung der Fixierungseinrichtung ist gemäß einer vorteilhaften Ausgestaltung vorgesehen, dass der Wegeventilblock und die Sekundärventileinheit mit einer Steuereinheit in Wirkverbindung stehen, welche dazu eingerichtet ist, bei Ansteuerung des Wegeventilblocks in einer Arbeitsphase, in der der Verbraucher mit Hydraulikmedium versorgt wird, gleichzeitig das schaltbare Sperrventil der Sekundärventileinheit in eine Sperrstellung zu betätigen, in der die hydraulische Fixierungseinrichtung zur Fixierung der Energieversorgungseinheit mit Hydraulikmedium versorgt wird. Bei einer entsprechenden Ansteuerung des Verbrauchers wird somit automatisch die Fixierungseinrichtung in die Fixierstellung betätigt.

Um die Fixierungseinrichtung im Fahrbetrieb des Flurförderzeugs in der Fixierstellung zu halten, ist die Steuereinheit bevorzugt dazu eingerichtet, im Fahrbetrieb des Flurförderzeugs das schaltbare Sperrventil der Sekundärventileinheit in die Sperrstellung zu betätigen. Dadurch wird auf einfache Weise im Fahrbetrieb die Fixierung der im Aufnahmeraum angeordneten Energieversorgungseinheit aufrechterhalten.

Da die Fixierung der Energieversorgungseinheit nur während der Fahrt des Flurförderzeugs notwendig ist, kann im Fahrzeugstillstand des Flurförderzeugs entsprechend ein automatisches Lösen der Fixierung erfolgen. Hierzu ist die Steuerungseinheit vorzugsweise dazu eingerichtet, im Fahrzeugstillstand des Flurförderzeugs das Sperrventil in eine Öffnungsstellung zu betätigen, in der Hydraulikmedium von der hydraulischen Fixierungseinrichtung zum Hydrauliktank abgegeben wird und die hydraulische Fixierungseinrichtung nicht mit Hydraulikmedium versorgt wird. Der Zylinder geht somit mittels der Feder in die Freigabestellung und die Fixierung der im Aufnahmeraum befindlichen Energieversorgungseinheit wird im Fahrzeugstillstand automatisch gelöst.

Gemäß einer besonders zweckmäßigen Ausgestaltung ist als Verbraucher der Arbeitshydraulik ein hydraulischer Neigezylinder eines Hubmastes des Flurförderzeugs vorgesehen. Neigbare Hubmaste sind bei Flurförderzeugen weit verbreitet. Aus Sicherheitsgründen muss der Hubmast während der Fahrt des Flurförderzeugs nach hinten geneigt werden, um ein nach vorne Rutschen der mit einer Lastaufnahmeeinrichtung, insbesondere mit Lastgabeln, aufgenommenen Last zu verhindern. Die Hydraulikleitung, die zur Rückneigeseite des Neigezylinders geführt ist, kann nun erfindungsgemäß angezapft werden, um die Fixierungseinrichtung mit Hydraulikmedium zu versorgen. Dabei wird durch die Verschaltung des Rückschlagventils und der Sekundärventileinheit erreicht, dass zunächst der Neigezylinder mit dem Hydraulikmedium beaufschlagt wird, bis die gewünschte Rückneigung des Hubmastes erfolgt ist. Erst nach Erreichen einer mechanischen Endlage des Neigezylinders übersteigt der Druck in der Hydraulikzweigleitung dem Öffnungsdruck des federbelasteten Rückschlagventils, und die Fixierung der Energieversorgungseinheit erfolgt.

Gemäß einer Weiterbildung der Erfindung erfolgt die Fixierung der Energieversorgungseinheit automatisch vor dem Anfahren des Flurförderzeugs automatisch beim Rückneigen des Hubmastes. Hierzu ist eine Fahrzeugsteuerungseinheit vorgesehen, die dazu eingerichtet ist, vor dem Anfahren des Flurförderzeugs automatisch den Neigezylinder zum Rückneigen des Hubmastes anzusteuern und gleichzeitig die Fixierungseinrichtung zum Sichern der Energieversorgungseinheit anzusteuern.

Die Erfindung bietet eine ganze Reihe von Vorteilen:
Die hydraulische Fixierungseinrichtung der Energieversorgungseinheit kann auf einfache Weise in den bestehenden Hydraulikkreislauf der Arbeitshydraulik des Flurförderzeugs integriert werden. Dabei können handelsübliche und robuste Bauteile verwendet werden, die auch eine Modulbauweise ermöglichen. Ein Rutschen der Energieversorgungseinheit im Aufnahmeraum, insbesondere der Traktionsbatterie im Batteriefach, wird durch die vollständige Fixierung zuverlässig verhindert. Dadurch entstehen keine mechanischen Geräusche, was auch mit einem Komfortgewinnn einhergeht. Es wird eine robuste Selbstnachstellung, ähnlich wie bei Hydrostößeln, ermöglicht. Außerdem ist eine Anpassung an verschiedene Batterietroggrößen der Traktionsbatterien ohne Umbau durch den Betreiber möglich. Darüber hinaus ergibt sich eine erhöhte Sicherheit des Flurförderzeugs durch Vermeidung von Rutschen der im Aufnahmeraum angeordneten Energieversorgungseinheit. Höhere Toleranzen der Batterietröge und/höhere Toleranzen der Aufnahmeräume spielen keine Rolle mehr und können von der hydraulischen Fixierungseinrichtung einfach ausgeglichen werden. Schließlich können Erschütterungen und damit Defekte bei sensiblen Batteriemanagementsystemen, beispielswiese bei Lithium-Ionen-Batterien, verhindert werden.

Weitere Vorteile und Einzelheiten der Erfindung werden anhand des in den schematischen Figuren dargestellten Ausführungsbeispiels näher erläutert. Hierbei zeigen
- Figur 1: einen Ausschnitt eines Flurförderzeugs mit einer wechselbaren Energieversorgungseinheit in einer perspektivischen Darstellung,
- Figur 2: eine schematische Darstellung des Wirkprinzips der erfindungsgemäßen hydraulischen Fixierung der Energieversorgungseinheit, und
- Figur 3: einen hydraulischen Schaltplan der erfindungsgemäßen Fixierung der Energieversorgungseinheit.

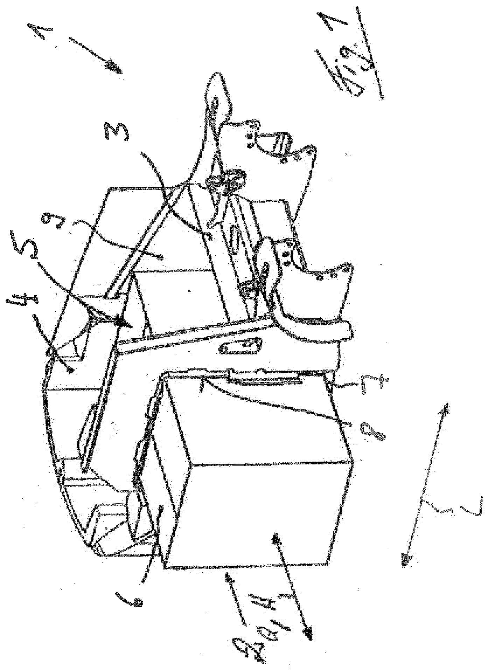

In der Figur 1 ist ein, beispielsweise als Gegengewichtsgabelstapler ausgebildetes, Flurförderzeug 1, in einer perspektivischen Ansicht dargestellt. Im dargestellten Ausführungsbeispiel ist das Flurförderzeug 1 mit einem seitlichen und horizontalen Wechsel einer Energieversorgungseinheit 2 in Fahrzeugquerrichtung Q versehen.

In einem mittleren Abschnitt einer von einem Fahrzeugrahmen 3 und einem Gegengewicht 4 gebildeten Fahrzeugstruktur 3, 4 des Flurförderzeugs 1 ist ein Aufnahmeraum 5 zur Aufnahme der Energieversorgungseinheit 2 ausgebildet. Als Energieversorgungseinheit 2 kann beispielsweise eine Traktionsbatterie 6, eine Brennstoffzelleneinheit oder eine Hybridantriebseinheit mit einem Verbrennungsmotor und einem Generator sowie gegebenenfalls einer Batterie vorgesehen werden. Im vorliegenden Ausführungsbeispiel ist der Aufnahmeraum 5 als Batteriefach zur Aufnahme einer als Traktionsbatterie 6 ausgebildeten Energieversorgungseinheit 2 ausgebildet. Die Traktionsbatterie 6 steht hierbei mit einer Batterieblockunterseite auf einer Aufstandsfläche 7 des Aufnahmeraums 5 auf. Die Aufstandsfläche 7 kann hierbei von einer Bodenplatte des Flurförderzeugs 1 gebildet werden, wobei die Energieversorgungseinheit 2 direkt auf dem Aufstandsfläche 7 aufstehen kann oder mittels einer nicht näher dargestellten fahrzeuginternen Rollenbahn bzw. nicht näher dargestellten Rollen an der Unterseite der Energieversorgungseinheit 2.

Das Flurförderzeug 1 ist im dargestellten Ausführungsbeispiel auf einen seitlichen Wechsel der als Traktionsbatterie 6 ausgebildeten Energieversorgungseinheit 2 in seitlicher und horizontaler Richtung H, d.h. in Fahrzeugquerrichtung Q, eingerichtet. Der Fahrzeugkörper ist hierzu an der rechten Fahrzeugseite mit einer seitlichen Öffnung 8 versehen, durch die die Energieversorgungseinheit 2 in seitlicher und horizontaler Richtung - wie in der Fig. 1 durch den die Wechselrichtung verdeutlichenden Pfeil H verdeutlicht ist - zum Wechsel der Energieversorgungseinheit 2 aus dem Aufnahmeraum 5 zumindest teilweise herausbewegt bzw. in den Aufnahmeraum 5 hineinbewegt werden kann. In der Fig. 1 ist eine Wechselposition dargestellt, in der sich die Energieversorgungseinheit 2 zumindest teilweise seitlich außerhalb des Aufnahmeraums 5 befindet. In einer Betriebsposition befindet sich die Energieversorgungseinheit 2 vollständig in dem Aufnahmeraum 5.

Der Aufnahmeraum 5 ist hierbei nach vorne durch ein vorderes Rahmenblech, zur linken Fahrzeugseite durch ein seitliches Rahmenblech 9 und nach hinten durch das Gegengewicht 4 abgrenzt. Im Bereich der linken Fahrzeugseite kann hierbei ein nicht näher dargestellter Anschlag für die Energieversorgungseinheit 2 ausgebildet werden, beispielsweise ein entsprechender Anschlag an dem Rahmenblech 9 oder dem Gegengewicht 4, der die eingeschobene Position der Energieversorgungseinheit 2 definiert und an dem die Energieversorgungseinheit 2 mit einer entsprechenden linken Stirnfläche während des Betriebs des Flurförderzeugs anliegt.

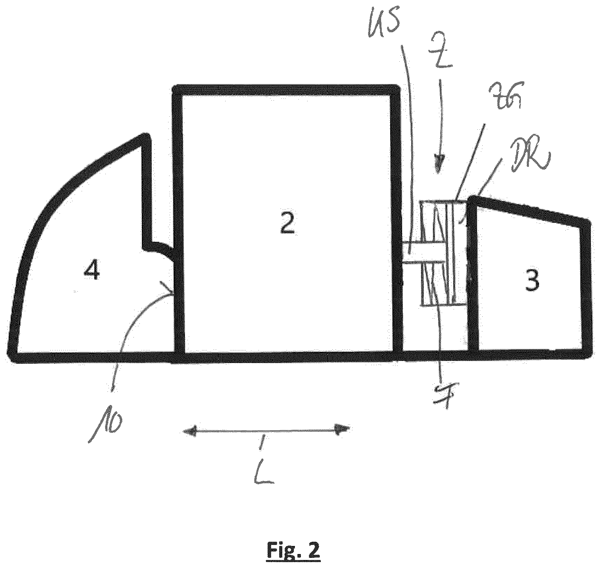

Die Figur 2 zeigt das Wirkprinzip der erfindungsgemäßen hydraulischen Fixierung der Energieversorgungseinheit 2. Die im Aufnahmeraum 5 angeordnete Energieversorgungseinheit 2, beispielsweise der Batterietrog einer Traktionsbatterie, wird im dargestellten Ausführungsbeispiel zwischen dem Gegengewicht 4 und dem Fahrzeugrahmen 3 durch eine als verfahrbaren Zylinder Z ausgebildete Fixierungseinrichtung Z mittels Klemmung fixiert. Der Zylinder Z ist als einfachwirkender Hydraulikzylinder ausgebildet, der eine in einem Zylindergehäuse ZG verfahrbare Kolbenstange KS aufweist, an der eine mit der Energieversorgungseinheit 2 in Anlage bringbare Anlagefläche ausgebildet ist. Der Hydraulikzylinder ist im dargestellten Ausführungsbeispiel mit dem Zylindergehäuse ZG an dem Fahrzeugrahmen 3 befestigt und weist eine in Fahrzeuglängsrichtung L liegende Wirkrichtung auf. Der Zylinder Z ist somit in axialer Fahrzeuglängsrichtung L zwischen dem Fahrzeugrahmen 3 und der Energieversorgungseinheit 2 eingebaut. Bei Beaufschlagung eines Druckraumes DR des Hydraulikzylinders mit Hydraulikmedium fährt die Kolbenstange KS in Richtung zur Energieversorgungseinheit 2 in eine Fixierstellung aus, in der die Energieversorgungseinheit 2 gegen einen Anschlag 10, der im dargestellten Ausführungsbeispiel an dem Gegengewicht 4 ausgebildet ist, gedrückt und dadurch geklemmt bzw. fixiert wird. Bei Entlastung des Druckraumes DR fährt die Kolbenstange KS mittels einer die Funktion einer Rückstellfeder aufweisenden Feder F in eine Freigabestellung ein, in der die Kolbenstange KS die Energieversorgungseinheit 2 wieder freigibt.

Durch die Klemmung wird die Energieversorgungseinheit 2 in Fahrzeuglängsrichtung L und in Fahrzeugquerrichtung Q gegen Rutschen in dem Aufnahmeraum 5 gesichert und somit eine vollständige Fixierung der Energieversorgungseinheit 2 erzielt.

Der Verfahrweg des Zylinders Z kann je nach Bedarf hoch (großer Klemmbereich) oder niedrig sein und baut damit unterschiedlich groß auf. Der Zylinderdurchmesser und damit das Volumen des Hydraulikmediums kann klein gehalten werden, da lediglich die Lose auszugleichen ist.

Während des Fahr- und Rangierbetriebs ist die im Aufnahmeraum 5 angeordnete Energieversorgungseinheit 2 zu klemmen und gegen Verrutschen zu sichern.

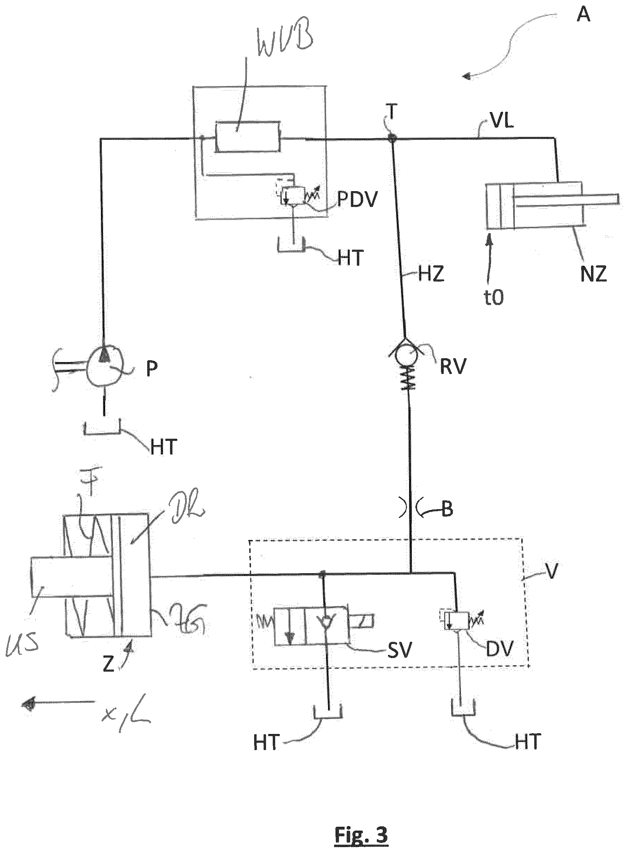

In der Figur 3 ist ein hydraulischer Schaltplan der Fixierung der Energieversorgungseinheit 2 gezeigt. Die Speisung des Zylinders Z mit Hydraulikmedium erfolgt durch die vorhandene Arbeitshydraulik A des Flurförderzeugs 1.

Im vorliegenden Ausführungsbeispiel weist das Flurförderzeug 1 einen neigbaren Hubmast mit Lastgabeln und einen hydraulischen Neigezylinder NZ zum Vor- und Rückneigen des Hubmastes auf. Der Neigezylinder NZ wird als Verbraucher NZ von der Arbeitshydraulik A versorgt. Üblicherweise wird beim Fahren des Flurförderzeugs 1 der Hubmast in eine Rückneigestellung gebracht, um ein nach vorne Rutschen einer auf den Lastgabeln angeordneten Last zu verhindern. Vor jeder Fahrt wird demnach der Neigezylinder NZ mit Hydraulikmedium versorgt, um den Neigezylinder NZ in eine Rückneigestellung zu beaufschlagen. Zum Rückneigen des Hubmastes speist die Arbeitshydraulik A den Neigezylinder NZ mittels einer Hydraulik-Versorgungsleitung VL an einer Rückneigeseite, so dass der Hubmast bzw. der Neigezylinder NHZ in eine mechanische Endlage der Rückneigung fährt. Dieser Zustand t0 wird erfindungsgemäß für die hydraulische Fixierung der Energieversorgungseinheit 2 genutzt.

Der im vorliegenden Ausführungsbeispiel für die Erfindung vorgesehene Teileumfang umfasst folgende Teile:
- T-Stück T im Hydraulikkreislauf der Arbeitshydraulik A, insbesondere in der Hydraulik-Versorgungsleitung VL zwischen einem Wegeventilblock WVB und der Rückneigeseite des Neigezylinders NZ.
- Hydraulikzweigleitung HZ vom T-Stück T zu einer Sekundärventileinheit V.
- Zu überwindendes federbelastetes Rückschlagventil RV in der Hydraulikzweigleitung HZ.
- Hydraulische Sekundärventileinheit V, bestehend aus einer Blende B, einem mechanischen sekundären Druckbegrenzungsventil DV und einem schaltbaren Sperrventil SV, das zwischen einer Sperrstellung und einer Öffnungsstellung betätigbar ist. Das Sperrventil SV ist bevorzugt mittels einer Feder in die Öffnungsstellung und mittels einer elektrischen Betätigungseinrichtung, beispielsweise einem Schaltmagnet, in die Sperrstellung beaufschlagt. Das Sperrventil SV und das Druckbegrenzungsventil DV ist jeweils in einer Ableitung angeordnet, die von der Hydraulikzweigleitung HZ zu einem Hydrauliktank HT geführt ist.
- Anbindung des Sekundärventils V an einen Hydrauliktank HT.
- Anbindung der Hydraulikzweigleitung HZ an den hydraulischen Zylinder Z zur Fixierung der Energieversorgungseinheit 2.

Die Funktionsweise der erfindungsgemäßen hydraulischen Fixierung der Energieversorgungseinheit 2 ist folgendermaßen:
Das Flurförderzeug 1 neigt den Hubmast zurück bis die mechanische Endlage t0 des Neigezylinders NZ erzielt wird. Bei Flurzeugen mit proportional gesteuertem Wegeventilblock WVB lenkt der Fahrer des Flurförderzeugs 1 hierzu einen Joystick aus und die Hydrauliksteuerung sorgt damit für das Anlaufen einer Hydraulikpumpe P und das Betätigen eines Rückneigeventils im Wegeventilblock WVB. Hier wäre auch ein automatischer Ablauf mittels einer Steuereinheit nach Einlegen eines Fahrtrichtungsschalters zum Ansteuern des Rückneigens realisierbar. Bei Flurförderzeugen mit mechanisch (händisch) gesteuertem Wegeventilblock WVB hat der Fahrer bewusst das Rückneigen auszulenken. Hierfür kann mittels einer visuellen Darstellung in einem Display die Anweisung erfolgen.

Während des Rückneigens des Hubmastes wird das Sperrventil SV von einer nicht näher dargestellten Steuereinheit mit elektrischem Strom versorgt und somit in die Sperrstellung beaufschlagt.

Nach Erreichen der Endlage t0 des Neigezylinders NZ übersteigt der Druck in der Hydraulikzweigleitung HZ vor dem federbelasteten Rückschlagventil RV den nominellen Rückneigedruck. Dieser liegt beispielsweise im Bereich von ca. 120 bar. Der von der Feder des Rückschlagventils RS vorgegebene Öffnungsdruck ist höher als der nominelle Rückneigedruck eingestellt und geringer als der Absicherungsdruck eines primären Druckbegrenzungsventils PDV im Wegeventilblock WV der Arbeitshydraulik A, der beispielsweise im Bereich von größer 200 bar ist. Beispielsweise ist der Öffnungsdruck des Rückschlagventils RV im Bereich von 150 bar zu wählen. Damit liegt der Öffnungsdruck des Rückschlagventils RV über dem nominellen Rückneigedruck von 120 bar und unter der Druckeinstellung des primären Druckbegrenzungsventils PDV im Wegeventilblock WVB von >200 bar.

Mit Erreichen des Druckniveaus des federbelasteten Rückschlagventils RV öffnet das federbelastete Rückschlagventils RV und das Sekundärventil V wird Hydraulikmedium versorgt. Das Sperrventil SV befindet sich schon in Sperrstellung, so dass der Zylinder Z im Druckraum DR mit Hydraulikmedium versorgt wird. Der Zylinder Z ist mit dem Sekundärventil V verbunden und die Kolbenstange KS des Zylinders Z fährt in x-Richtung (Fahrzeuglängsrichtung L) in die Fixierstellung aus bis zur Anlage an die Energieversorgungseinheit 2 und beaufschlagt die Energieversorgungseinheit 2 gegen den Anschlag 10. Dabei wird die Klemmkraft bis zum Niveau des voreingestellten sekundären Druckbegrenzungsventils DV der Sekundärventileinheit V erhöht. Durch das sekundäre Druckbegrenzungsventil DV der Sekundärventileinheit V erfolgt somit eine Druckabsicherung und Begrenzung der Klemmkraft des Zylinders Z. Zusätzlich erfolgt weiterhin die primäre Druckabsicherung des gesamten Hydraulikkreises der Arbeitshydraulik A durch das primäre Druckbegrenzungsventil PDV im Wegeventilblock WVB.

Das Klemmen der Energieversorgungseinheit 2 ist nur während der Fahrt des Flurförderzeugs 1 notwendig. Von der Steuereinheit wird hierzu das Sperrventil SV in die Sperrstellung betätigt, um die Klemmung der Energieversorgungseinheit 2 aufrechtzuerhalten.

Mit jedem Fahrzeugstopp bzw. Stillstand des Flurförderzeugs, der beispielsweise durch eine betätigte Handbremse oder eine Neutralstellung des Fahrtrichtungsschalters von der Steuereinheit detektiert werden kann, wird die Bestromung des Sperrventils SV von der Steuereinheit beendet und das Sperrventil SV mittels der Feder in Öffnungsstellung beaufschlagt. Der Druckraum DR des Zylinders Z ist bei geöffnetem Sperrventil SV mit dem Hydrauliktank HT verbunden. Das Rückschlagventil RV wird von der Feder in die Sperrstellung betätigt.

Die als Rückstellfeder ausgebildete Feder F im Zylinder Z verschiebt somit die Kolbenstange KS zurück in die Freigabestellung, wobei das Hydraulikmedium aus dem Druckraum DR über das geöffnete Sperrventil SV in den Hydrauliktank HT abströmt.

Die Energieversorgungseinheit 2 ist somit frei von Klemmkräften und kann mit ausreichend Freiraum gewechselt werden.

Um variierende Nenngrößen der Energieversorgungseinheit 2 klemmen zu können, kann der Zylinder Z mit Ausgleichsschienen versehen sein. Somit bleibt der Nennhub des Zylinders Z immer konstant. Somit können beispielsweise unterschiedliche Batterietröge bei gleichem Nennhub verbaut werden.

Durch eine Sensorik, z.B. durch einen oder mehrere Drucksensoren, kann eine weitere Anpassung an unterschiedliche Anforderungen erfolgen.

Außerdem kann auch eine zusätzliche Abzweigung von der Versorgungsleitung VL vorgesehen sein, um weitere Verriegelungsfunktionen, z.B. für eine Batterieklappe, zu erfüllen.

Die erfindungsgemäße hydraulisch betätigte Fixierungseinrichtung Z bildet eine über die bereits vorhandene Arbeitshydraulik A selbstnachstellende und selbstständig lösende Vollfixierung der Energieversorgungseinheit 2. Es ist für die Fixierung der Energieversorgungseinheit 2 keine Überwachung durch den Fahrer des Flurförderzeugs 1 oder keine separate Ansteuerung der Fixierungseinrichtung Z durch den Fahrer erforderlich. In der Freigabestellung ist ein entsprechender Freiraum für einen einfachen Wechsel der Energieversorgungseinheit 2 vorhanden.

Die Erfindung ist nicht auf ein Flurförderzeug 1 beschränkt, dass mit einem seitlichen und horizontalen Wechsel einer Energieversorgungseinheit 2 in Fahrzeugquerrichtung Q versehen. Alternativ kann das Flurförderzeug 1 an der Oberseite des Aufnahmeraums 5 mit der Öffnung 8 versehen sein und auf einen vertikalen Wechsel der als Traktionsbatterie 6 ausgebildeten Energieversorgungseinheit 2 eingerichtet sein.

## Patentansprüche

1. Flurförderzeug (1), insbesondere elektrisch betriebenes Flurförderzeug, mit einem Hydraulikkreislauf einer Arbeitshydraulik (A) und einer in einem Aufnahmeraum (5) angeordneten Energieversorgungseinheit (2), insbesondere einer in einem Batteriefach angeordneten Traktionsbatterie, wobei das Flurförderzeug (1) mit einer Öffnung (8) für einen Wechsel der Energieversorgungseinheit (2) in vertikaler und/oder in horizontaler Richtung (H; Q) versehen ist, insbesondere das Flurförderzeug (1) mit einer seitlichen Öffnung (8) für einen seitlichen Wechsel der Energieversorgungseinheit (2) in horizontaler Richtung (H, Q) versehen ist, und eine Sicherungseinrichtung zum Sichern der in dem Aufnahmeraum (5) angeordneten Energieversorgungseinheit (2) während des Betriebs des Flurförderzeugs (1) vorgesehen ist, wobei die Sicherungseinrichtung eine hydraulisch betätigte Fixierungseinrichtung (Z) umfasst, die mit dem Hydraulikkreislauf der Arbeitshydraulik (A) hydraulisch verbunden ist, wobei die Fixierungseinrichtung (Z) einen hydraulisch zwischen einer Freigabestellung und einer Fixierungsstellung verfahrbaren Zylinder (Z) aufweist, wobei der Zylinder (Z) an einem Zylinderende an einer Fahrzeugstruktur (3, 4) des Flurförderzeugs (1) befestigt ist und am anderen Ende mit einer Anlagefläche für eine Fläche der Energieversorgungseinheit (2) versehen ist, wobei der Zylinder (Z) die Anlagefläche in der Fixierungsstellung in Anlage an der Fläche der Energieversorgungseinheit (2) hält und die Energieversorgungseinheit (2) gegen einen Anschlag (10) der Fahrzeugstruktur (3, 4) beaufschlagt und wobei der Zylinder (Z) die Anlagefläche in der Freigabestellung in einem Abstand zur Fläche der Energieversorgungseinheit (2) hält, **dadurch gekennzeichnet, dass** der Zylinder (Z) als einfachwirkender Hydraulikzylinder ausgebildet ist, der eine in einem Zylindergehäuse (ZG) verfahrbare Kolbenstange (KS) aufweist, an der die Anlagefläche ausgebildet ist, wobei die Kolbenstange (KS) bei Beaufschlagung eines Druckraumes (DR) mit Hydraulikmedium in die Fixierstellung ausfährt und bei Entlastung des Druckraumes (DR) mittels einer Feder (F) in die Freigabestellung einfährt.

2. Flurförderzeug nach Anspruch 1, **dadurch gekennzeichnet, dass** die Fixierungseinrichtung (Z) selbstnachstellend und wieder lösbar ausgebildet ist.

3. Flurförderzeug nach Anspruch 1 oder 2, **dadurch gekennzeichnet, dass** die Fixierungseinrichtung (Z) zur Fixierung der Energieversorgungseinheit (2) in Fahrzeuglängsrichtung (L) ausgebildet ist.

4. Flurförderzeug nach einem der Ansprüche 1 bis 3, **dadurch gekennzeichnet, dass** die Fixierungseinrichtung (Z) zur Fixierung der Energieversorgungseinheit (2) in Fahrzeugquerrichtung (Q) ausgebildet ist.

5. Flurförderzeug nach einem der Ansprüche 1 bis 4, **dadurch gekennzeichnet, dass** die Fixierungseinrichtung (Z) über eine zwischen einem Wegeventilblock (WVB) und einem Verbraucher (NZ) der Arbeitshydraulik (A) abzweigende Hydraulikzweigleitung (HZ) mit dem Hydraulikkreislauf der Arbeitshydraulik (A) verbunden ist.

6. Flurförderzeug nach Anspruch 5, **dadurch gekennzeichnet, dass** in die Hydraulikzweigleitung (HZ) eine hydraulische Sekundärventileinheit (V) eingeschaltet ist, die zumindest ein Druckbegrenzungsventil (DV) und ein schaltbares Sperrventil (SV) umfasst.

7. Flurförderzeug nach Anspruch 6, **dadurch gekennzeichnet, dass** das Druckbegrenzungsventil (DV) und das Sperrventil (SV) in Ableitungen zu einem Hydrauliktank (HT) eingeschaltet sind, die von der zur Fixierungseinrichtung (Z) führenden Hydraulikzweigleitung (HZ) abzweigen.

8. Flurförderzeug nach Anspruch 6 oder 7, **dadurch gekennzeichnet, dass** der Sekundärventileinheit (V) ein in Richtung zur Abzweigung der Hydraulikzweigleitung (HZ) vom Hydraulikkreislauf der Arbeitshydraulik (A) sperrendes Rückschlagventil (RV), insbesondere ein federbelastetes Rückschlagventil (RS), vorgeschaltet ist.

9. Flurförderzeug nach einem der Ansprüche 6 bis 8, **dadurch gekennzeichnet, dass** der Wegeventilblock (WVB) und die Sekundärventileinheit (V) mit einer Steuereinheit in Wirkverbindung stehen, welche dazu eingerichtet ist, bei Ansteuerung des Wegeventilblocks (WVB) in einer Arbeitsphase, in der der Verbraucher (NZ) mit Hydraulikmedium versorgt wird, gleichzeitig das schaltbare Sperrventil (SV) der Sekundärventileinheit (V) in eine Sperrstellung zu betätigen, in der die hydraulische Fixierungseinrichtung (Z) zur Fixierung der Energieversorgungseinheit (2) mit Hydraulikmedium versorgt wird.

10. Flurförderzeug nach einem der Ansprüche 6 bis 9, **dadurch gekennzeichnet, dass** der Wegeventilblock (WVB) und die Sekundärventileinheit (V) mit einer Steuereinheit in Wirkverbindung stehen, welche dazu eingerichtet ist, im Fahrbetrieb des Flurförderzeugs (1) das Sperrventil (SV) in eine Sperrstellung zu betätigen.

11. Flurförderzeug nach einem der Ansprüche 6 bis 10, **dadurch gekennzeichnet, dass** der Wegeventilblock (WVB) und die Sekundärventileinheit (V) mit einer Steuereinheit in Wirkverbindung stehen, welche dazu eingerichtet ist, im Fahrzeugstillstand des Flurförderzeugs (1) das Sperrventil (SV) in eine Öffnungsstellung zu betätigen, in der Hydraulikmedium von der hydraulischen Fixierungseinrichtung (Z) zum Hydrauliktank (HT) abgegeben wird und die hydraulische Fixierungseinrichtung (Z) nicht mit Hydraulikmedium versorgt wird.

12. Flurförderzeug nach einem der Ansprüche 5 bis 11, **dadurch gekennzeichnet, dass** als Verbraucher (NZ) ein hydraulischer Neigezylinder (NZ) eines Hubmastes des Flurförderzeugs (1) vorgesehen ist.

13. Flurförderzeug nach Anspruch 12, **dadurch gekennzeichnet, dass** eine Fahrzeugsteuerungseinheit vorgesehen ist, die dazu eingerichtet ist, vor dem Anfahren des Flurförderzeugs (1) automatisch den Neigezylinder (NZ) zum Rückneigen des Hubmastes anzusteuern und gleichzeitig die Fixierungseinrichtung (Z) zum Sichern der Energieversorgungseinheit (2) anzusteuern.

## Claims

1. Industrial truck (1), in particular an electrically driven industrial truck, having a hydraulic circuit of a working hydraulic unit (A) and a power supply unit (2) arranged in a receiving space (5), in particular a traction battery arranged in a battery compartment, wherein the industrial truck (1) is provided with an opening (8) for replacing the power supply unit (2) in a vertical and/or horizontal direction (H; Q), in particular the industrial truck (1) is provided with a lateral opening (8) for laterally replacing the power supply unit (2) in a horizontal direction (H, Q), and provision is made for a securing device for securing the power supply unit (2) arranged in the receiving space (5) during operation of the industrial truck (1), wherein the securing device comprises a hydraulically actuated fixing device (Z), which is hydraulically connected to the hydraulic circuit of the working hydraulic unit (A), wherein the fixing device (Z) has a cylinder (Z) that can be hydraulically displaced between a released position and a fixed position, wherein the cylinder (Z), at one cylinder end, is fastened to a vehicle structure (3, 4) of the industrial truck (1) and, at the other end, is provided with an abutment surface for a surface of the power supply unit (2), wherein, in the fixed position, the cylinder (Z) holds the abutment surface in abutment against the surface of the power supply unit (2) and urges the power supply unit (2) against a stop (10) of the vehicle structure (3, 4) and wherein, in the released position, the cylinder (Z) holds the abutment surface at a distance from the surface of the power supply unit (2), **characterized in that** the cylinder (Z) is configured as a single-acting hydraulic cylinder, which has a piston rod (KS) that can be displaced within a cylinder housing (ZG) and on which the abutment surface is configured, wherein the piston rod (KS), when hydraulic medium is applied to a pressure chamber (DR), extends into the fixed position and, when the pressure chamber (DR) is relieved by means of a spring (F), retracts into the released position.

2. Industrial truck according to Claim 1, **characterized in that** the fixing device (Z) is configured to be self-adjusting and releasable.

3. Industrial truck according to Claim 1 or 2, **characterized in that** the fixing device (Z) is configured to fix the power supply unit (2) in the vehicle longitudinal direction (L).

4. Industrial truck according to one of Claims 1 to 3, **characterized in that** the fixing device (Z) is configured to fix the power supply unit (2) in the vehicle transverse direction (Q).

5. Industrial truck according to one of Claims 1 to 4, **characterized in that** the fixing device (Z) is connected to the hydraulic circuit of the working hydraulic unit (A) via a hydraulic branch line (HZ), which branches off between a directional-valve block (WVB) and a consumer (NZ) of the working hydraulic unit (A).

6. Industrial truck according to Claim 5, **characterized in that** a hydraulic secondary valve unit (V), which comprises at least a pressure-limiting valve (DV) and a switchable shut-off valve (SV), is connected into the hydraulic branch line (HZ).

7. Industrial truck according to Claim 6, **characterized in that** the pressure-limiting valve (DV) and the shut-off valve (SV) are connected into discharge lines that lead to a hydraulic tank (HT) and branch off from the hydraulic branch line (HZ) that leads to the fixing device (Z).

8. Industrial truck according to Claim 6 or 7, **characterized in that** a non-return valve (RV), in particular a spring-loaded non-return valve (RS), which blocks in the direction towards the branch of the hydraulic branch line (HZ) from the hydraulic circuit of the working hydraulic unit (A), is connected upstream of the secondary valve unit (V).

9. Industrial truck according to one of Claims 6 to 8, **characterized in that** the directional-valve block (WVB) and the secondary valve unit (V) are operatively connected to a control unit that is configured, when the directional-valve block (WVB) is activated in a working phase in which the consumer (NZ) is supplied with hydraulic medium, to simultaneously actuate the switchable shut-off valve (SV) of the secondary valve unit (V) into a blocking position in which the hydraulic fixing device (Z) for fixing the power supply unit (2) is supplied with hydraulic medium.

10. Industrial truck according to one of Claims 6 to 9, **characterized in that** the directional-valve block (WVB) and the secondary valve unit (V) are operatively connected to a control unit that is configured, during driving operation of the industrial truck (1), to actuate the shut-off valve (SV) into a blocking position.

11. Industrial truck according to one of Claims 6 to 10, **characterized in that** the directional-valve block (WVB) and the secondary valve unit (V) are operatively connected to a control unit that is configured, while the industrial truck (1) is at a standstill, to actuate the shut-off valve (SV) into an open position in which hydraulic medium is discharged from the hydraulic fixing device (Z) to the hydraulic tank (HT) and the hydraulic fixing device (Z) is not supplied with hydraulic medium.

12. Industrial truck according to one of Claims 5 to 11, **characterized in that** the consumer (NZ) provided is a hydraulic tilt cylinder (NZ) of a lifting mast of the industrial truck (1).

13. Industrial truck according to Claim 12, **characterized in that** provision is made for a vehicle control unit that is configured, before the industrial truck (1) is started up, to automatically activate the tilt cylinder (NZ) for tilting the lifting mast backwards and to simultaneously activate the fixing device (Z) for securing the power supply unit (2).

## Revendications

1. Chariot de manutention (1), en particulier chariot de manutention à commande électrique, comportant un circuit hydraulique d'un système hydraulique de travail (A) et une unité d'alimentation en énergie (2) disposée dans un espace de réception (5), en particulier une batterie de traction disposée dans un compartiment de batterie, le chariot de manutention (1) étant doté d'une ouverture (8) pour un changement de l'unité d'alimentation en énergie (2) dans la direction verticale et/ou horizontale (H ; Q), en particulier le chariot de manutention (1) étant doté d'une ouverture latérale (8) pour un changement latéral de l'unité d'alimentation en énergie (2) dans la direction horizontale (H, Q), et un dispositif de blocage servant à bloquer l'unité d'alimentation en énergie (2) disposée dans l'espace de réception (5) pendant le fonctionnement du chariot de manutention (1) étant prévu, le dispositif de blocage comprenant un dispositif de fixation (Z) actionné de manière hydraulique, lequel est relié de manière hydraulique au circuit hydraulique du système hydraulique de travail (A), le dispositif de fixation (Z) présentant un cylindre (Z) déplaçable de manière hydraulique entre une position de libération et une position de fixation, le cylindre (Z) étant, à une extrémité de cylindre, fixé à une structure de véhicule (3, 4) du chariot de manutention (1) et, à l'autre extrémité, doté d'une surface d'appui pour une surface de l'unité d'alimentation en énergie (2), le cylindre (Z) maintenant la surface d'appui en appui contre la surface de l'unité d'alimentation en énergie (2) dans la position de fixation et sollicitant l'unité d'alimentation en énergie (2) contre une butée (10) de la structure de véhicule (3, 4) et le cylindre (Z) maintenant la surface d'appui dans la position de libération à une distance de la surface de l'unité d'alimentation en énergie (2), **caractérisé en ce que**
le cylindre (Z) est réalisé sous forme de cylindre hydraulique à action simple, qui présente une tige de piston (KS) déplaçable dans un corps de cylindre (ZG), tige de piston sur laquelle la surface d'appui est réalisée, la tige de piston (KS), lors de la sollicitation d'un espace de pression (DR) avec un fluide hydraulique, sortant dans la position de fixation et, lors de la décharge de l'espace de pression (DR), rentrant dans la position de libération au moyen d'un ressort (F).

2. Chariot de manutention selon la revendication 1, **caractérisé en ce que** le dispositif de fixation (Z) est réalisé de manière autoréglable et à nouveau libérable.

3. Chariot de manutention selon la revendication 1 ou 2, **caractérisé en ce que** le dispositif de fixation (Z) est réalisé pour la fixation de l'unité d'alimentation en énergie (2) dans la direction longitudinale du véhicule (L).

4. Chariot de manutention selon l'une des revendications 1 à 3, **caractérisé en ce que** le dispositif de fixation (Z) est réalisé pour la fixation de l'unité d'alimentation en énergie (2) dans la direction transversale du véhicule (Q).

5. Chariot de manutention selon l'une des revendications 1 à 4, **caractérisé en ce que** le dispositif de fixation (Z) est relié au circuit hydraulique du système hydraulique de travail (A) par le biais d'une conduite de dérivation hydraulique (HZ) bifurquant entre un bloc distributeur (WVB) et un consommateur (NZ) du système hydraulique de travail (A).

6. Chariot de manutention selon la revendication 5, **caractérisé en ce qu'**une unité de soupapes secondaires (V) hydraulique est connectée dans la conduite de dérivation hydraulique (HZ), laquelle unité comprend au moins une soupape de limitation de pression (DV) et une soupape d'arrêt (SV) commutable.

7. Chariot de manutention selon la revendication 6, **caractérisé en ce que** la soupape de limitation de pression (DV) et la soupape d'arrêt (SV) sont connectées dans des conduites d'évacuation vers un réservoir hydraulique (HT), lesquelles conduites d'évacuation bifurquent à partir de la conduite de dérivation hydraulique (HZ) menant jusqu'au dispositif de fixation (Z) .

8. Chariot de manutention selon la revendication 6 ou 7, **caractérisé en ce qu'**une soupape antiretour (RV) bloquant en direction de la dérivation de la conduite de dérivation hydraulique (HZ) à partir du circuit hydraulique du système hydraulique de travail (A), en particulier une soupape antiretour (RS) sollicitée par ressort, est placée en amont de l'unité de soupapes secondaires (V).

9. Chariot de manutention selon l'une des revendications 6 à 8, **caractérisé en ce que** le bloc distributeur (WVB) et l'unité de soupapes secondaires (V) sont en liaison fonctionnelle avec une unité de commande, laquelle est conçue pour actionner simultanément la soupape d'arrêt (SV) commutable de l'unité de soupapes secondaires (V) dans une position d'arrêt lors de la commande du bloc distributeur (WVB) dans une phase de travail dans laquelle le consommateur (NZ) est alimentée en fluide hydraulique, position d'arrêt dans laquelle le dispositif de fixation hydraulique (Z) est alimenté en fluide hydraulique pour la fixation de l'unité d'alimentation en énergie (2).

10. Chariot de manutention selon l'une des revendications 6 à 9, **caractérisé en ce que** le bloc distributeur (WVB) et l'unité de soupapes secondaires (V) sont en liaison fonctionnelle avec une unité de commande, laquelle est conçue pour actionner la soupape d'arrêt (SV) dans une position d'arrêt lors du fonctionnement de conduite du chariot de manutention (1).

11. Chariot de manutention selon l'une des revendications 6 à 10, **caractérisé en ce que** le bloc distributeur (WVB) et l'unité de soupapes secondaires (V) sont en liaison fonctionnelle avec une unité de commande, laquelle est conçue pour actionner la soupape d'arrêt (SV) dans une position d'ouverture lors de l'arrêt du chariot de manutention (1), position d'ouverture dans laquelle du fluide hydraulique est distribué du dispositif de fixation (Z) hydraulique au réservoir hydraulique (HT) et le dispositif de fixation (Z) hydraulique n'est pas alimenté en fluide hydraulique.

12. Chariot de manutention selon l'une des revendications 5 à 11, **caractérisé en ce qu'**un cylindre d'inclinaison (NZ) hydraulique d'un mât de levage du chariot de manutention (1) est prévu en tant que consommateur (NZ).

13. Chariot de manutention selon la revendication 12, **caractérisé en ce qu'**une unité de commande de véhicule est prévue, laquelle est conçue, avant le démarrage du chariot de manutention (1), pour commander automatiquement le cylindre d'inclinaison (NZ) pour l'inclinaison arrière du mât de levage et pour commander simultanément le dispositif de fixation (Z) pour le blocage de l'unité d'alimentation en énergie (2).
